# EUROPÄISCHE PATENTANMELDUNG

(11) **EP 2 239 031 A1**
(43) Veröffentlichungstag der Anmeldung: **13.10.2010**
(21) Anmeldenummer: 10156583.6
(22) Anmeldetag: 16.03.2010
(51) Int. Cl.: B01D 24/26, C02F 1/00, B01D 24/00, E04H 4/12

(54) **Verteilerplatte**

(30) Priorität: 06.04.2009 CH 5572009
(71) Anmelder: Natural Blue GmbH, 6340 Baar (CH)
(72) Erfinder: Scheuter, Beat, 3123, Belp (CH)
(74) Vertreter: Hasler, Erich

(57) **Zusammenfassung**

Die Erfindung betrifft einen Verteiler (11) zur Anordnung in Filterbecken (59) zur Poolwasseraufbereitung. Dieser hat einen Verteilerfuss (12) und daran angeschlossen ein Anschlussrohr (19) für den Anschluss einer Wasserzuleitung. Das Anschlussrohr (19) verläuft wenigstens über 15 cm senkrecht zu einer Ausdehnungsebene einer oberen Wandung (13) des Verteilerfusses (12). In einem Filterbecken (59) mit einer Filterschicht (45) und wenigstens einem solchen Verteiler (11) ist der Verteilerfuss (12) unter der Filterschicht (45) angeordnet. Das Anschlussrohr (19) durchstösst die Filterschicht (45). Eine an das Anschlussrohr (19) angeschlossene Wasserzuleitung (33) verläuft parallel zur Filterschicht (45) und ist über dieser angeordnet. Bei der Herstellung eines solchen Filterbeckens (59) wird zuerst wenigstens ein mit einem Anschlussrohr (19) bestückter Verteiler (11) auf den Grund (41) eines Beckens (59) versetzt, danach werden wasserdurchlässigen Schichten (43,45,47) inklusive einer Filterschicht (45) über dem Verteilerfuss (12) und um das Anschlussrohr (19) herum eingebracht, und schliesslich wird eine Wasserzuleitung (33) an das Anschlussrohr (19) angeschlossen und die Wasserzuleitung mit der Deckschicht (47) überdeckt.

## Beschreibung

Die Erfindung betrifft eine Verteilerplatte zur Anordnung unter einer Filterschicht für die Filterung von durch die Filterschicht aufsteigendem Wasser.

Für die Aufbereitung von Wasser, insbesondere bei der biologischen Aufbereitung von Pool-Wasser, wird dieses gelegentlich gegen die Schwerkraft durch eine Filterschicht gepresst. Zu diesem Zweck wird das Wasser mit Überdruck in eine durchlässige Verteilschicht unter der Filterschicht geleitet. Es wird in dieser Verteilschicht möglichst gleichmässig verteilt, so dass es die Filterschicht mit über die Ausdehnung der Filterschicht gleichmässiger und niedriger Strömungsgeschwindigkeit durchströmt. Dazu ist eine Vorverteilung des Wassers innerhalb der Verteilschicht gewünscht, damit nur geringe horizontale Strömungen notwendig sind, um die homogene Strömung durch die Filterschicht hindurch zu erreichen.

Eine solche Vorverteilung wird bisher durch gelochte Schläuche erreicht, die in die Verteilschicht eingelegt sind. Bei einer Wasserverteileinrichtung mit solchen gelochten Schläuchen sind die aus den Löchern austretende Wassermenge und die Austrittgeschwindigkeit nicht über alle Löcher konstant. Durch den Druckabfall zwischen der Einspeisungsseite des Schlauches und dem geschlossenen Ende des Schlauches wird nahe der Einspeisung mehr Wasser mit höherer Geschwindigkeit aus dem Schlauch gepresst als nahe des geschlossenen Endes.

Schläuche und Leitungen haben zudem den Nachteil, dass entlang diesen längs ausgedehnten Elementen z.B. schon durch geringe Bewegungen der Schläuche Wassergassen geschaffen werden, durch die Wasser mit geringerem Widerstand fliessen kann, als durch das daneben vorliegende Material. Dies kann dazu führen, dass grosse lokale Unterschiede in der durch die Filterschicht gepressten Wassermenge und der Durchflussgeschwindigkeit entstehen. Dies wieder verringert die Filterungsqualität.

Aus dem Stand der Technik sind ausserdem eine Reihe von Filtervorrichtungen bekannt, bei denen die Zuleitung des Wassers zumindest teilweise durch ein senkrechtes Rohr von oben erfolgt. Das Rohr ist mit einem in eine Filterschichtung eingebetteten System von Leitungen verbunden, die längsseitig Öffnungen aufweisen. Aufgrund der mit oben genannten Wasserschläuchen vergleichbaren Konstruktion (Leitungen mit längsseitig angeordneten Öffnungen), treten auch hier die genannten Probleme auf.

In der US 6,426,005 B1 ist beispielsweise ein zylindrischer Filtertank mit einem bewegten Filtermaterial (Sand) beschrieben der mittig eine diagonal und teilweise senkrecht verlaufende Zuleitung für Schmutzwasser aufweist. Die Zuleitung geht im unteren Bereich des Tanks in eine Mehrzahl sternförmig angeordneter Verteilerrohre über, die an ihrer Unterseite Öffnungen aufweisen. Die gleiche Vorrichtung mit verbessertem Pumpenteil ist aus der WO 2007/135202 A1 bzw. der US 2009/0101568 A1 bekannt. Auch hier werden radial angeordnete Strukturen für die Verteilung des Wassers im Filterbett verwendet, zu deren Ausgestaltung auf das spanische Äquivalent der oben genannten US 6,426,005 B1 (SP 2220770) verwiesen wird. Eine etwas andere Ausgestaltung des Verteilers wird in der GB 1212869 offenbart, wo die sternförmig angeordneten Verteilerrohre an ihren Enden miteinander verbunden sind und so die Speichen eines Rades bilden. Schliesslich wird in der EP 0 771 761 A1 ein System beschrieben, bei dem das Filtermaterial statt in einem Tank in einem oben offenen Bett im Freien angeordnet ist. Aufgrund der wesentlich grösseren Dimensionierung sind hier die Verteilerrohre zweckmässigerweise parallel angeordnet und an ihren Enden verschlossen.

Es ist daher Aufgabe der Erfindung, eine Wasserverteileinrichtung, ein Filterbecken mit einer solchen und ein Verfahren zur Herstellung eines solchen Filterbeckens vorzuschlagen, mit der oder dem eine möglichst gleichbleibende Durchströmung der Filterschicht erreicht werden kann.

Diese Aufgabe wird erfindungsgemäss durch die Gegenstände der unabhängigen Ansprüche 1, 7 und 12 gelöst.

Eine erfindungsgemässe Wasserverteileinrichtung weist einen Verteiler zur Anordnung in Filterbecken zur Poolwasseraufbereitung auf. Dieser Verteiler besitzt einen als Verteilerplatte ausgestalteten Verteilerfuss mit einer oberen Wandung. An der oberen Wandung ist ein Anschlussrohr angeschlossenen, das für den Anschluss des Verteilers an eine Wasserzuleitung geeignet ist. Das Anschlussrohr verläuft wenigstens über 15 cm senkrecht zu einer Ausdehnungsebene der oberen Wandung, damit die es über der Verteilplatte angeordnete Schichten auf möglichst kurzem Weg durchdringt.

Es hat sich gezeigt, dass die Anordnung von Wasserleitungen unter einer Filterschicht oft zu einem ungleichmässigen Wasserfluss führt. Entlang den Leitungen können Wassergassen entstehen, in denen Wasser mit geringerem Widerstand fliesst, als durch das benachbarte Schichtmaterial. Dadurch entstehen einseitige Belastungen einer darüber angeordneten Filterschicht, was die Filterleistung der Filterschicht drastisch reduziert. Es wird bei ungleichmässiger Durchfliessung der Filterschicht nicht die ganze Ausdehnung der Filterschicht genutzt, und der genutzt Teil der Filterschicht wird zu rasch durchflossen.

Damit entlang des Anschlussrohrs keine Wassergassen entstehen, wird ein Anschlussrohr bevorzugt, an dem wenigstens ein Kragen ausgebildet ist. Ein solcher Kragen lenkt das entlang des Rohrs fliessende Wasser vom Rohr weg. Damit kann einer Gassenbildung durch die Filterschicht hindurch mit einem einfachen Mittel entgegengewirkt werden. Ein solcher Kragen dient auch der Stabilisierung des Anschlussrohrs und verhindert dadurch eine Bewegung des Rohrs beim Anschliessend des Anschlussrohrs an eine Wasserzuleitung. Dadurch wird ebenfalls einer Gassenbildung vorgebeugt, die durch eine Bewegung des Anschlussrohrs und entsprechende Komprimierung oder Verschiebung von an das Rohr anschliessendem Material bewirkt werden könnte. Vorzugsweise sind am Anschlussrohr drei Kragen ausgebildet. Zwei davon sind zweckmässigerweise im Bereich der Filterschicht angeordnet, um entlang des Rohrs fliessendes Wasser von dessen Oberfläche weg zu lenken, ein dritter Kragen ist grösser ausgebildet und dient der Stabilisierung des Anschlussrohrs innerhalb einer Deckschicht über der Filterschicht.

Zweckmässigerweise weist die obere Wandung des Verteilerfusses Wasseraustrittöffnungen auf. Dadurch tritt das unter die obere Wandung der Verteilerplatte gepresste Wasser nicht nur an deren Umfang hervor, sondern auch durch deren oberseitige Wandung hindurch. Dadurch ist eine grossflächigere und daher gleichmässigere Verteilung des Wassers erreicht.

Die Verteilerplatte kann mit lediglich einer oberen Wandung ausgebildet sein und Distanzmittel aufweisen, die diese obere Wandung in Abstand zu einer Auflage, insbesondere dem Boden eines Beckens halten. Dadurch fliesst Wasser zwischen der oberen Wandung und dem Boden des Beckens in eine Verteilschicht eines Filterbeckens. Die Verteilerplatte weist jedoch vorteilhaft auch eine untere Wandung auf. Es braucht bei dieser Ausführung zwischen der oberen Wandung und der unteren Wandung wenigstens einen wasserdurchlässigen Distanzring. Dank dem Vorsehen einer unteren Wandung und wenigstens einem Distanzring ist einer Verstopfung des Raumes innerhalb der Verteilerplatte vorgebeugt, da die Öffnungen in dem mit dem Material der Verteilschicht in Berührung stehenden Distanzring kleiner sind als die kleinste Korngrösse eines in der Verteilschicht benutzten Granulats. Dennoch kann der Abstand zwischen den beiden Wandungen grösser als diese Korngrösse ausgebildet sein, so dass der Verteiler einen geringeren Wasserwiderstand bietet als die Verteilschicht und daher eine gleichmässige Verteilung des Wassers erfolgt.

Das Anschlussrohr könnte mit dem Verteilerfuss verschweisst sein, oder sogar einstückig mit diesem ausgebildet sein. Vorzugsweise ist das Anschlussrohr mit dem Verteilerfuss jedoch verschraubbar. Dies erlaubt die Verwendung von handelsüblichen Rohren als Anschlussrohr. Dadurch können auch unterschiedlich lange Anschlussrohre vorgesehen sein, um den Schichtstärken eines Filterbeckens entsprechend angepasste Anschlussrohre vorzusehen. Zweckmässige Längen liegen zwischen 15 und 50 cm. Bevorzugte Längen liegen zwischen 20 und 35 cm. Diese entsprechen einem Schichtaufbau mit:
Einer untersten Verteilschicht von ca. 10 bis 20 cm Stärke, und vorzugsweise 15 cm Stärke;
einer darauf angeordneten Filterschicht von 8 bis 12 cm Stärke, vorzugsweise ca. 10 cm Stärke;
einer darüber angeordneten Deckschicht zur Beschwerung und zum Schutz der Filterschicht von wenigstens 15 cm, vorzugsweise wenigstens 25 cm.

Die Deckschicht kann auch über den Wasserspiegel im Becken hinauf mit einem wasserdurchlässigen Material angefüllt sein, so dass die Wasseroberfläche nicht sichtbar ist.

Zweckmässigerweise ist zwischen der Wasserzuleitung und dem Anschlussrohr ein Winkel ausgebildet, der gegenüber dem Anschlussrohr verdrehbar ist. Diese Verdrehbarkeit eines Übergangswinkels zwischen dem vertikalen Anschlussrohr und einer horizontalen Wasserzuleitung eines Verteilnetzes erlaubt die Anschlüsse genau aufeinander auszurichten, ohne das Anschlussrohr dazu bewegen zu müssen. Dies stellt sicher, dass das Filtermaterial dicht an den Anschlussrohren anliegend bleibt und daher dort keine unerwünschten Wassergassen entstehen.

Um einen erwähnten Kragen auf sehr einfache Art auszubilden weist das Anschlussrohr ein in Abschnitte aufgetrenntes Hüllrohr auf, und der wenigstens eine Kragen ist zwischen solchen Abschnitten des Hüllrohrs auf das Anschlussrohr aufgesteckt. Dadurch nimmt der Kragen dank einer Pressung zwischen den Abschnitten eine stabile Lage ein. Mittels einer Verschraubung kann eine solche Pressung leicht erreicht werden. Eine Verschraubung kann zwischen der Wasserzuleitung und dem Anschlussrohr, bzw. zwischen einem Winkel und dem Anschlussrohr erfolgen. Die Pressung der Hüllrohrabschnitte kann zwischen einer Mutter einer solchen Verschraubung und der oberen Wandung der Verteilerplatte, einem Anschlussstutzen an der oberen Wandung oder einer Mutter zur Verschraubung des Anschlussrohrs mit der oberen Wandung erreicht werden.

Die Erfindung betrifft auch ein Filterbecken mit einer Filterschicht und wenigstens einem erfindungsgemässen Verteiler. Ein solches Filterbecken ist wie folgt aufgebaut: Die obere Wandung der Verteilerplatte ist unter der Filterschicht angeordnet. Das Anschlussrohr durchstösst dank seiner Länge die Filterschicht. Eine an das Anschlussrohr angeschlossene Wasserzuleitung verläuft parallel zur Filterschicht und ist über dieser Filterschicht angeordnet. Die Wasserzuleitung ist zweckmässigerweise in einer Deckschicht über der Filterschicht angeordnet. Daher ist sie durch das Material der Deckschicht stabilisiert und dennoch leicht zugänglich, da dazu lediglich ein oberster Bereich der Deckschicht aufgegraben zu werden braucht.

Ein zweckmässiger Aufbau der Schichten sieht vor, dass unter der Filterschicht eine Verteilschicht und über der Filterschicht eine Deckschicht ausgebildet ist. Die Verteilschicht ist vorteilhaft aus einem Granulat gebildet, z.B. mit der Korngrösse 16/32. Als ein solches Granulat wird üblicherweise Kies verwendet. Dasselbe Material kann auch als Deckschicht Verwendung finden. Als Filterschicht sind poröse Granulate üblich, die eine sehr grosse Oberfläche aufweisen. Solche offenporige, mineralische Schaumkörner können mit Bakterien versetzt werden, oder entwickeln auch ohne Starthilfe auf ihrer Oberfläche einen Bakterienbelag, der organische Stoffe, Verbindungen und Partikel abbaut und so das Wasser reinigt. Eine Körnung des Granulats der Filterschicht liegt vorzugsweise im Bereich 4/8 mm oder sogar feiner.

Wie erwähnt ist vorteilhaft wenigstens ein Kragen im Bereich der Filterschicht ausgebildet, um Wassergassen entlang der Anschlussrohre zu verhindern und so sicherzustellen, dass die Filterschicht gleichmässig und mit geringer Durchflussgeschwindigkeit durchflossen wird. Dadurch werden gleichmässig lange Verweilzeiten des zu reinigenden Wassers in der Filterschicht gewährleistet.

Die Filterschicht kann einen Raum zwischen einem ersten und einem zweiten Kragen ausfüllen. Wo wenigstens zwei Kragen vorgesehen sind, können diese daher in einer Position angeordnet sein, welche die Lage der Filterschicht anzeigt. Das hat auch den Vorteil, dass beim Einbau der Schichten des Filterbeckens die Schichtstärken schon durch die Verteiler vorgegeben sind und nicht mehr eingemessen zu werden brauchen.

Zur Stabilisierung des Anschlussrohrs ist es von Vorteil, ein Stabilisationskragen in der Deckschicht zu integrieren. Der Stabilisierungskragen kann einen Durchmesser von ca. 20 cm oder auch mehr aufweisen und so im Material der Deckschicht stark verankert sein.

Zur Herstellung eines Filterbeckens unter Verwendung von erfindungsgemässen Verteilerplatten oder wenigstens einer solchen Verteilerplatte sind folgende Arbeitsschritte zweckmässig:
Zuerst wird wenigstens eine mit einem Anschlussrohr bestückte Verteilerplatte auf den Grund eines Beckens eingebracht. Danach werden wasserdurchlässige Schichten inklusive einer Filterschicht über die Verteilerplatte und um deren Anschlussrohr herum eingebracht. Schliesslich wird eine Wasserzuleitung an das Anschlussrohr angeschlossen. Vorteilhaft wird danach die Deckschicht soweit verstärkt, dass die Wasserzuleitung von der Deckschicht abgedeckt ist.

Zweckmässigerweise wird bis zu dem ersten Kragen Material für eine Verteilschicht, über dieser Verteilschicht und bis zu dem zweiten Kragen Material für eine Filterschicht, und schliesslich darüber eine Deckschicht eingebracht. Das Einbringen der Schichten ist daher durch die Kragen sehr vereinfacht, und zudem verhindern die Kragen die Bildung einer Wassergasse durch die Filterschicht entlang dem Anschlussrohr.

Vorteilhaft wird erst nach dem Einbringen der Schichten bis zum Stabilisierungskragen das Anschlussrohr an die Wasserzuleitung angeschlossen. Dank dieser Massnahme stört die Wasserzuleitung und ein Verteilnetz gebildet aus den Wasserzuleitungen das Einbringen des Materials für die Schichten nicht. Dadurch können die Schichten, insbesondere die Filterschicht, sauber und dicht eingebracht werden, ohne dass dabei die Gefahr besteht, dass die Anschlussleitungen ausversehen bewegt werden. Nach dem Anschliessen der Wasserzuleitung kann diese mit einer Oberflächenschicht aus dem gleichen Material wie die Deckschicht überdeckt werden. Die Oberflächenschicht kann zudem auch dekorativen Charakter haben.

Die Erfindung wird anhand der Figuren im Detail erläutert. Es zeigt:
- Fig. 1: eine perspektivische Ansicht eines Verteilers mit Anschlussrohr und Anschlussbogen.
- Fig. 2: eine Aufsicht auf den Verteiler gemäss Figur 1.
- Fig. 3: eine Seitenansicht des Verteilers gemäss Figur 1.
- Fig. 4: eine transparente, perspektivische Ansicht eines Verteilers.
- Fig. 5: einen Querschnitt durch einen Verteiler und die Schichten, in denen er eingebettet ist.
- Fig. 6: eine Seitenansicht eines Verteilers vor dem Anschluss an die Wasserzuleitung.
- Fig. 7: eine Aufsicht auf ein Filterbecken.

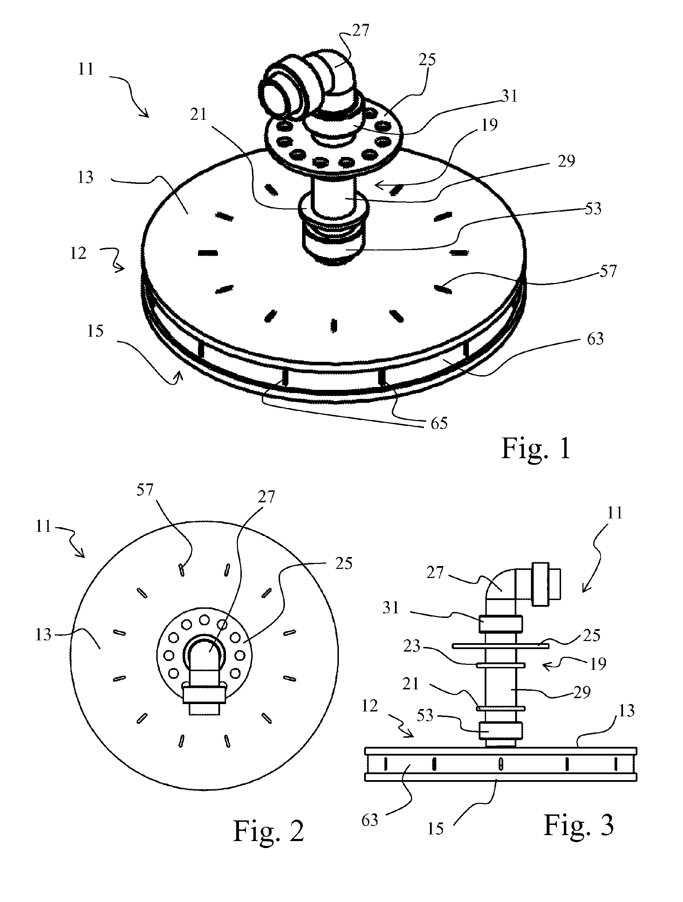

Die in den Figuren 1 bis 7 dargestellten Verteiler 11 sind bevorzugte Ausführungsbeispiele. Wesentlich am erfindungsgemässen Verteiler 11 ist, dass er mit einem Anschlussrohr 19 versehen ist, das direkt durch Schichten, in denen der Verteiler eingebettet wird, hindurch reicht. Dazu ist das Anschlussrohr wenigstens 15 cm lang. Je nach Schichtaufbau kann es auch bis zu 40, 50 oder mehr cm lang sein. Für einen üblichen Schichtaufbau ist es etwa 25 cm lang und mit einem rechtwinkligen Winkelfitting 27 ergänzt. Die horizontale Rohrachse des Winkelfittings ist etwa 40 cm von der Oberfläche des Untergrunds entfernt.

### In einer bevorzugten Ausführungsform ist der Verteiler 11 wie folgt ausgebildet:

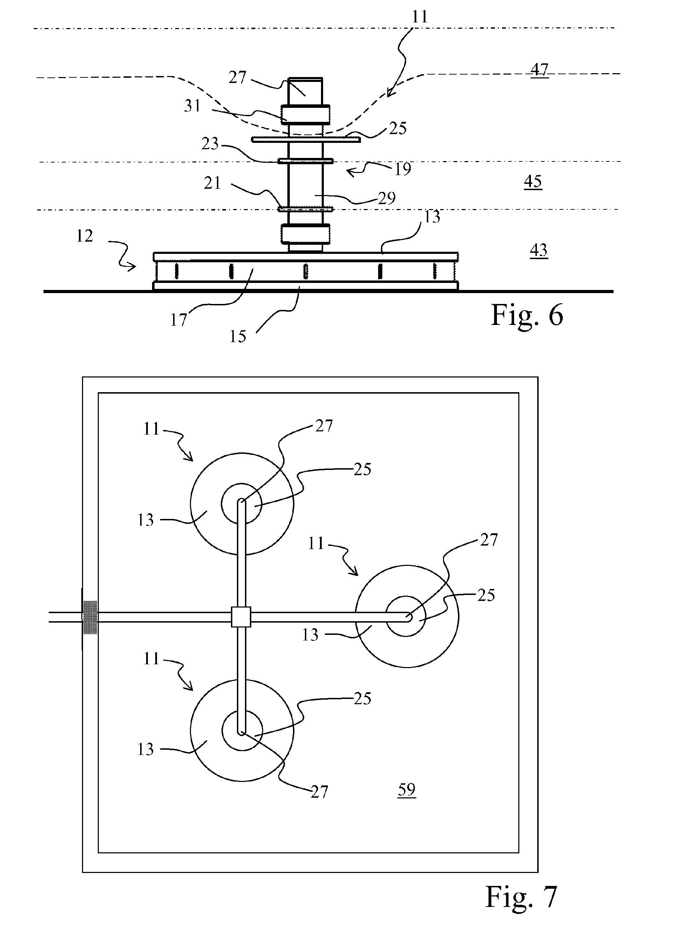

Ein Fuss 12 des Verteilers 11 hat einen Durchmesser von ca. 50 bis 70 cm. Der Fuss 12 kann verschiedene Umrissformen aufweisen. Die gewählte kreisrunde Form hat den Vorteil der Symmetrie. Der Fuss 12 bildet zusammen mit dem Anschlussrohr 19 einen Verteiler 11. Der Fuss 12 ist dazu ausgebildet, lagestabil auf einem Untergrund eines Filterbeckens versetzt werden zu können. Das Anschlussrohr 19 ist dazu ausgebildet, durch eine über dem Fuss 12 in das Filterbecken eingebrachte Schichtung zur Filterung und biologischen Reinigung des durch den Verteiler eingeführten Wassers hindurch zu reichen. Am oberen Ende des Anschlussrohrs 19 ist ein Fitting ausgebildet, um das Anschlussrohr mit einer Wasserzuleitung verbinden zu können. Das Fitting, in Figur 1 ein Winkelfitting 27 mit Verschraubungsteilen, kann beim Versetzen des Verteilers 11 durch eine Libelle 28 (Fig. 6) ersetzt sein, damit der Verteiler ohne weitere Hilfsmittel im Lot bzw. horizontal verlegt werden kann. Die Libelle verbleibt während den Einbauarbeiten der Schichten auf dem Anschlussrohr, damit die vertikale Lage des Anschlussrohrs jederzeit kontrolliert werden kann.

Bei einem Verfahren zur Herstellung eines Filterbeckens ist es also bevorzugt, wenn der Verteiler 11 mit einer Libelle 28 im Anschlussrohr 19 versetzt wird und die Libelle 28 beim Versetzen in die Horizontale gebracht wird. Nach einer bevorzugten Ausgestaltung wird die Libelle (28) nach dem Einbringen der Schichten (43,45,47) durch ein Anschlussfitting (27) ersetzt.

Der zentrale Gedanke der Erfindung liegt darin, die Wasserzuleitungen über einer Filterschicht zu führen und möglichst direkt durch die Filterschicht hindurch mit einer unter der Filterschicht angeordneten Wasserverteileinrichtung zu verbinden. Daher ist die Länge des Anschlussrohrs 19 entscheidend für die Erfindung. Diese Länge muss erlauben, einen für die Filterung von Poolwasser geeigneten Schichtaufbau zu durchqueren. Diese direkte Führung eines Anschlussrohrs 19 durch die Schichten erscheint dem Fachmann anfänglich widersprüchlich mit der Forderung, nach Möglichkeit zu verhindern, dass Wassergassen durch die Schichten hindurch entstehen, entlang welchen Wasser praktisch ungefiltert die Schichten durchqueren kann. Um solche Wassergassen zu vermeiden, werden bisher die Wasserverteileinrichtungen unter der Filterschicht durch Rohrleitungen oder Schläuche mit Wasser versorgt, die ebenfalls unter der Filterschicht angeordnet sind. Es hat sich aber gezeigt, dass eine direkte Durchdringung der Filterschicht mit einem Anschlussrohr 19 kein Problempunkt darstellt, da die Lage der Anschlussrohre beim Einbau jederzeit unter Kontrolle ist. Vielmehr ist, im Gegensatz zu den bekannten Systemen, deren Verrohrung in der untersten Schicht sofort nach Einbau dieser Schicht verborgen ist, ein kontrolliert einwandfreier Einbau möglich, weil diese Kontrollmöglichkeit gegeben ist.

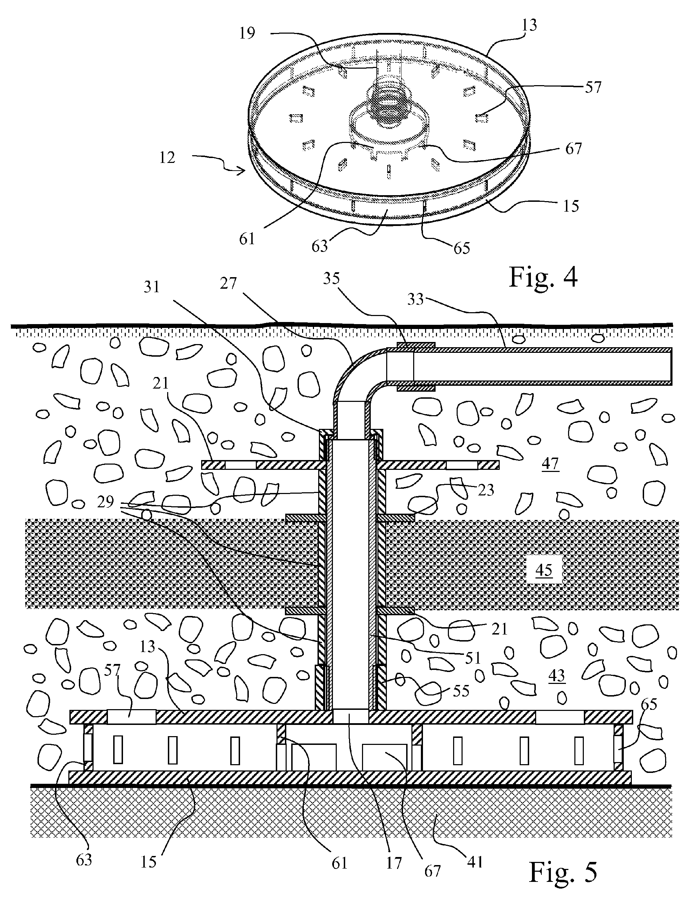

Wie aus den Figuren ersichtlich ist, hat eine spezielle Ausführung des Anschlussrohrs 19 den Vorteil, sicher zu stellen, dass die Anschlussrohre nicht zur Wassergassenbildung beitragen. Dafür sind am Anschlussrohr 19 Kragen 21, 23, 25 ausgebildet. Etwa 15 cm über dem Untergrund 41 des Filterbeckens (Figuren 5 und 6), also etwa 15 cm über der Auflagefläche des Verteilers 11 ist ein erster Kragen 21 ausgebildet. Im Abstand von 8 bis 10 cm dazu ist ein zweiter Kragen 23 am Anschlussrohr ausgebildet. Diese beiden Kragen 21 und 23 zeigen an, bis wo die erste Schicht, eine Verteilschicht 43 mit geringem Durchflusswiderstand, und die zweite Schicht, eine Filterschicht 45 mit höherem Durchflusswiderstand als die Verteilschicht, reichen sollen. Darüber ist ein weiterer Kragen, ein grösserer Stabilierungskragen 25 ausgebildet, der in einer Deckschicht 47 eingepackt, zur Stabilisierung des Verteilers 11 beiträgt.

In Abwandlung des dargestellten Ausführungsbeispiels kann auch lediglich ein Kragen vorgesehen sein der in der Filterschicht 45 eingebettet ist.

Die Konstruktion der Kragen geht aus der Figur 5 hervor. Ein Innenrohr 51 des Anschlussrohrs 19 ist mit dem Verteilerfuss 12 verschraubt. Es kann ein Stutzen 55 am Fuss 12 vorhanden sein, in den oder auf den das Innenrohr 51 geschraubt ist. Es kann auch eine Verschraubung mittels einer Überwurfmutter 53 (Figuren 1 und 3) vorgesehen sein, mit der das Innenrohr 51 mit dem Stutzen 55 verschraubt ist. Es ist das Innenrohr 51, das an seinem oberen Ende mit einem Winkelfitting 27 und daran anschliessend einem Wasserzuleitungsrohr 33 an ein Verteilernetz angeschlossen ist. Über das Innenrohr 51 sind Hüllrohrstücke 29 gesteckt. Jeweils zwischen zwei Hüllrohrstücken 29 ist eine Ringscheibe eingeklemmt. Diese Ringscheibe bildet den Kragen 21, 23 oder 25.

Damit die Ringscheiben eingeklemmt sind, sind die Abmessungen von Hüllrohrstücken 29 und Ringscheiben auf die Länge des Innenrohrs 51 und die an dessen Enden ausgebildeten Gewinde aufeinander abgestimmt, so dass eine Klemmung zwischen dem Fitting 27 und dem Verteilerfuss 12 erreicht wird. Es kann auch eine separate Mutter (nicht dargestellt) über das Innenrohr 51 geschraubt werden, um die Hüllrohrstücke und Ringscheiben zusammen zu pressen.

Das Winkelfitting 27 ist um eine Achse des Anschlussrohrs 19 verdrehbar ausgebildet, damit es nach dem Einbau der Schichten auf die Verrohrung mit Wasserzuleitungen 33 ausgerichtet werden kann, ohne das Anschlussrohr 19 zu bewegen.

Der Aufbau des Verteilerfusses 12 ist aus den Figuren 4 und 5 ersichtlich. Eine untere Wandung 15 bildet eine Auflagefläche, die auf einen Untergrund 41 gelegt werden kann. Diese untere Wandung 15 ist ohne Durchbrüche, so dass sie einen wasserdichten Abschluss bildet. In einem Abstand zur unteren Wandung von ca. 3,5 bis 4 cm ist eine obere Wandung 13 ausgebildet, die mit Durchbrüchen 57 versehen ist. An der oberen Wandung 15 ist ein Stutzen 55 ausgebildet, der mit dem Anschlussrohr 19, beziehungsweise mit dem Innenrohr 51 zusammenschraubbar ist. Die obere Wandung kann dabei einen Endanschlag für das Innenrohr 51 bilden.

Die beiden Wandungen 13 und 15 sind durch Distanzringe 61 und 63 in Abstand zueinander gehalten. Diese Distanzringe sind mit Durchlassöffnungen versehen, so dass das Wasser radial vom Einspeisungspunkt beim Stutzen 55 nach aussen strömen kann und durch Schlitze 65 im äusseren Distanzring 63 in die Verteilschicht 43 eindringen kann. Um die Wandungen auch im Zentrum in Abstand zu halten, ist um die Zuführungsstelle 17 herum ein innerer Distanzring 61 ausgebildet, der grosse Durchlässe 67 aufweist.

Der Verteiler 11 ist vorteilhaft aus Kunststoff gefertigt. Einzelteile sind zu grösseren Gebilden zusammengeschweisst oder zusammengeklebt. Die Einzelteile können spanabhebend produziert oder als Spritzguss- oder Schleudergussteile gefertigt sein. Andere Teile wie Rohre und Profile können extrudiert sein.

Der Verteiler ist, wie in Figur 5 dargestellt, auf einem Untergrund 41, z.B. einer Betonplatte, aufliegend versetzt. Es kann auch ein Sand- oder Mörtelbett für den Verteilerfuss 12 vorgesehen sein, damit dieser in der Höhe und in der Waage exakt versetzt werden kann. Eine Verteilschicht 43 ist um den Verteilerfuss 12 und das unterste Stück des Anschlussrohrs 19 in das Filterbecken 59 (Fig. 7) eingefüllt. Ab dem unteren Kragen 21 ist eine Filterschicht 45 auf die Verteilschicht 43 aufgebracht. Die Stärke einer solchen Filterschicht 45 liegt zwischen 8 und 12 cm. Diese Schicht besteht aus einem Granulat einer feinen Korngrösse, z.B. 2/4mm und/oder 4/8mm. Das offenporige Granulat mit einer sehr grossen inneren Oberfläche dient einer biologischen Regenerierung des Wassers. Über der Filterschicht ist eine Deckschicht 47 eingebracht, die das Granulat der Filterschicht 45 beschwert und so vor einem Aufschwemmen schützt. Die Deckschicht 47 ist bis über die Verrohrung aufgefüllt, so dass die Wasserzuleitungen abgedeckt sind. Sie kann in einer obersten Schicht als Dekorationsschicht ausgeführt sein. Der Wasserspiegel im Filterbecken kann über der Deckschicht liegen oder aber auch innerhalb der Deckschicht.

In Figur 7 ist ein Filterbecken 59 in einer Aufsicht dargestellt. Es besitzt einen Beckenrand, der über die Schichten, insbesondere über den Wasserspiegel hinauf ragt und der mit einem Wasserauslass (nicht dargestellt) versehen ist, um das gereinigte Wasser wieder in einen Pumpenkreislauf oder direkt in einen Pool zurück fliessen zu lassen. Im Filterbecken 59 sind einige Verteiler 11 aufgestellt. Diese sind über ein Verteilnetz verbunden. Das Verteilnetz besteht aus Wasserzuleitungen 33, die miteinander vernetzt sein können, oder als Ringleitung ausgebildet sind. Mit dieser Verrohrung kann Wasser in die Verteiler 11 gepresst werden. Das Wasser stammt in der Regel aus einem Schwimmbecken, einem Pool und ist nicht mit Chlor oder Ozon versetzt, sondern wird biologisch in der Filterschicht regeneriert. Die Verteilung der Verteiler im Filterbecken ist möglichst gleichmässig vorgesehen. Die Abstände zwischen den Verteilern 11 und dem Rand des Filterbeckens 59 sind etwa halb so gross wie die Abstände zwischen den Verteilern 11 unter sich.

Aus Figur 6 ist der Aufbau der Schichtungen im Filterbecken 59 ersichtlich. Anhand dieser Figur kann nun die Vorgehensweise beim Bau eines solchen Filterbeckens erklärt werden. Nach dem Betonieren eines Beckens mit Boden 41, Rand, Auslauf, und dem Erstellen einer Zuführungsleitung für das zu reinigende Wasser werden Verteiler 11 gleichmässig auf die Fläche des Bodens 41 verteilt. Sie werden mit Vorteil so angeordnet, dass sie durch einfache Leitungsführung miteinander verbunden, bzw. an eine Zuführungsleitung angeschlossen werden können. Das Leitungsnetz kann Verzweigungen aufweisen, es kann aber auch als Ringleitung ausgebildet sein und daher mit T-Stücken an die Anschlussrohre der Verteiler angeschlossen sein.

Bevor die Verrohrung der Verteiler 11 ausgeführt wird, werden diese mittels Niveliergerät und mittels Libelle auf eine nach Möglichkeit gemeinsame, horizontale Ebene ausgerichtet. Zur einfachen Ausrichtung ist die Libelle 28 direkt auf das Anschlussrohr 19 aufgesetzt und schliesst das Anschlussrohr oben ab. Die Libellen 28 können während und nach jedem Arbeitsschritt kontrolliert werden und garantieren so eine optimale Einbettung der Verteiler 11 in die Schichten 43,45,47 im Filterbecken 59. Die Verteilschicht 43, z.B. aus Kies der Körnung 16/32 mm, wird nun eingebracht und damit die Verteilerfüsse 12 in die Schicht eingebunden. Danach wird die Filterschicht 45 eingebracht und damit das Anschlussrohr 19 noch besser in der Vertikalen gehalten. Schliesslich wird die Deckschicht 47 lediglich zum Teil eingebracht. Wie in Figur 6 ersichtlich (unterbrochene Linie innerhalb der Deckschicht 47), werden dabei die oberen Enden der Anschlussrohre 19 ausgespart, so dass die Libelle 28 einfach durch das Winkelfitting 27 ersetzt werden kann. Die Deckschicht 47 wird vorerst so hoch gefüllt, dass die Verrohrung mit den Wasserzuleitungen 33 auf die Deckschicht 47 aufgelegt werden kann. Die Wasserzuleitungen 33 werden dann mit einem Verbindungsglied 35 an die Winkelfittings 27 angeschlossen. Die Winkelfittings 27 werden dazu auf die Wasserzuleitungen 33 ausgerichtet durch Verdrehen um die Achse des Anschlussrohrs. Dann wird das Winkelfitting am Anschlussrohr fest gemacht durch Anziehen der Überwurfmutter 31. Nach der Verrohrung wird die Deckschicht 47 über diese Wasserzuleitungen 33 hinauf eingebracht, so dass die Wasserzuleitungen verdeckt und vor UV-Strahlung geschützt sind.

Dank eines solchen Vorgehens ist die Gefahr minimiert, durch Berühren der Wasserzuleitungen beim Einbringen der Schichten die Verteiler aus der optimalen Lage zu bewegen.

Die Verteilschicht und die Deckschicht sind beide aus einem Granulat, z.B. Kies, mit möglichst grossem Durchflussquerschnitt geschüttet und leicht verdichtet.

Zusammenfassend kann gesagt werden, dass die Erfindung einen Verteiler 11 zur Anordnung in Filterbecken 59 zur Poolwasseraufbereitung betrifft. Dieser hat einen Verteilerfuss 12 und daran angeschlossen ein Anschlussrohr 19 für den Anschluss einer Wasserzuleitung. Das Anschlussrohr 19 verläuft wenigstens über 15 cm senkrecht zu einer Ausdehnungsebene einer oberen Wandung 13 des Verteilerfusses 12. In einem Filterbecken 59 mit einer Filterschicht 45 und wenigstens einem solchen Verteiler 11 ist der Verteilerfuss 12 unter der Filterschicht 45 angeordnet. Das Anschlussrohr 19 durchstösst die Filterschicht 45. Eine an das Anschlussrohr 19 angeschlossene Wasserzuleitung 33 verläuft parallel zur Filterschicht 45 und ist über dieser angeordnet. Bei der Herstellung eines solchen Filterbeckens 59 wird zuerst wenigstens ein mit einem Anschlussrohr 19 bestückter Verteiler 11 auf den Grund 41 eines Beckens 59 versetzt, danach werden wasserdurchlässigen Schichten 43,45,47 inklusive einer Filterschicht 45 über dem Verteilerfuss 12 und um das Anschlussrohr 19 herum eingebracht, und schliesslich wird eine Wasserzuleitung 33 an das Anschlussrohr 19 angeschlossen und die Wasserzuleitung mit der Deckschicht 47 überdeckt.

### Liste der Bezugsziffern:

- 11: Verteiler
- 12: Verteilerfuss
- 13: obere Wandung
- 15: untere Wandung
- 17: zentrale Zuführungsstelle
- 19: Anschlussrohr
- 21: unterer Kragen
- 23: oberer Kragen
- 25: Stabilisierungskragen
- 27: Winkelfitting
- 28: Libelle
- 29: Hüllrohrstücke
- 31: Überwurfmutter
- 33: Wasserzuleitung
- 35: Verbindungsglied
- 41: Untergrund/Betonboden
- 43: Verteilschicht
- 45: Filterschicht
- 47: Deckschicht
- 51: Inneres Rohr
- 53: Mutter
- 55: Stutzen
- 57: Durchbrüche
- 59: Filterbecken
- 61: innerer Distanzring
- 63: ausserer Distanzring
- 65: Schlitz
- 67: Durchlass

## Patentansprüche

1. Verteiler (11) zur Anordnung in Filterbecken (59) zur Poolwasseraufbereitung, aufweisend einen Verteilerfuss (12) mit einer oberen Wandung (13) und ein an der oberen Wandung (13) angeschlossenes Anschlussrohr (19) für den Anschluss des Verteilerfusses (12) an eine Wasserzuleitung,
**dadurch gekennzeichnet,**
**dass** der Verteilerfuss als Verteilerplatte ausgestaltet ist und dass das Anschlussrohr (19) wenigstens über 15 cm senkrecht zu einer Ausdehnungsebene der oberen Wandung (13) verläuft.

2. Verteiler nach Anspruch 1, **dadurch gekennzeichnet, dass** am Anschlussrohr (19) wenigstens ein Kragen (21,23,25) ausgebildet ist.

3. Verteiler nach einem der Ansprüche 1 bis 2, **dadurch gekennzeichnet, dass** die obere Wandung (13) des Verteilers (11) Wasseraustrittöffnungen (57) aufweist.

4. Verteiler nach einem der Ansprüche 1 bis 3, **dadurch gekennzeichnet, dass** der Verteiler (11) eine untere Wandung (15) aufweist, und zwischen der oberen Wandung (13) und der unteren Wandung (15) wenigstens ein wasserdurchlässiger Distanzring (61,63) ausgebildet ist.

5. Verteiler nach einem der Ansprüche 1 bis 4, **dadurch gekennzeichnet, dass** ein Winkelfitting (27) zwischen der Wasserzuleitung (33) und dem Anschlussrohr (19) ausgebildet ist, das gegenüber dem Anschlussrohr (19) verdrehbar ist.

6. Verteiler nach einem der Ansprüche 2 bis 5, **dadurch gekennzeichnet, dass** das Anschlussrohr (19) ein Hüllrohr (29) aufweist, und dass der wenigstens eine Kragen (21,23,25) zwischen Abschnitten des Hüllrohrs (29) auf ein Innenrohr (51) des Anschlussrohrs (19)aufgesteckt ist.

7. Filterbecken (59) mit einer Filterschicht (45) und wenigstens einem Verteiler (11) nach den Ansprüchen 1 bis 6, **dadurch gekennzeichnet, dass** die obere Wandung (13) des Verteilers (11) unter der Filterschicht (45) angeordnet ist, das Anschlussrohr (19) die Filterschicht (45) durchstösst und eine an das Anschlussrohr (19) angeschlossene Wasserzuleitung (33) parallel zur Filterschicht (45) und über dieser angeordnet ist.

8. Filterbecken nach Anspruch 7, **dadurch gekennzeichnet, dass** unter der Filterschicht (45) eine Verteilschicht (43) und über der Filterschicht (45) eine Deckschicht (47) ausgebildet ist.

9. Filterbecken nach einem der Ansprüche 7 oder 8 in Verbindung mit Anspruch 2 oder 3, **dadurch gekennzeichnet, dass** wenigstens ein Kragen (21,23,25) im Bereich der Filterschicht (45) ausgebildet ist.

10. Filterbecken nach Anspruch 9, **dadurch gekennzeichnet, dass** die Filterschicht (45) einen Raum zwischen einem ersten Kragen (21) und einem zweiten Kragen (23) ausfüllt.

11. Filterbecken nach einem der Ansprüche 7 bis 10, **dadurch gekennzeichnet, dass** ein Stabilisationskragen (25) in der Deckschicht (47) integriert ist.

12. Verfahren zur Herstellung eines Filterbeckens (59) unter Verwendung von Verteilern (11) gemäss einem der Ansprüche 1 bis 6, mit den Arbeitsschritten:
Zuerst Einbringen von wenigstens einem mit einem Anschlussrohr (19) bestückten Verteiler (11) auf den Grund (41) eines Beckens (59),
danach Einbringen von wasserdurchlässigen Schichten (43,45,47) inklusive einer Filterschicht (45) über dem Verteiler (11) und um dessen Anschlussrohr (19) herum,
und schliesslich Anschliessen einer Wasserzuleitung (33) an das Anschlussrohr (19).

13. Verfahren nach Anspruch 12, in Verbindung mit Anspruch 2, **dadurch gekennzeichnet, dass** bis zu dem ersten Kragen (21) Material für eine Verteilschicht (43), über dieser Verteilschicht (43) und bis zu dem zweiten Kragen (23) Material für eine Filterschicht (45), und schliesslich darüber eine Deckschicht (47) eingebracht wird.

14. Verfahren nach Anspruch 12 oder 13, **dadurch gekennzeichnet, dass** erst nach dem Einbringen der Schichten (43,45,47) bis zum Stabilisierungskragen (25) das Anschlussrohr (19) an die Wasserzuleitung (33) angeschlossen wird.

15. Verfahren nach einem der Ansprüche 12 bis 14, **dadurch gekennzeichnet, dass** nach dem Anschliessen der Wasserzuleitung (33) die Wasserzuleitung mit einer Oberflächenschicht überdeckt wird.
